# EUROPÄISCHE PATENTSCHRIFT

(11) **EP 2 022 437 B1**
(45) Veröffentlichungstag und Bekanntmachung des Hinweises auf die Patenterteilung: **11.01.2012**
(21) Anmeldenummer: 08161958.7
(22) Anmeldetag: 07.08.2008
(51) Int. Cl.: A61C 1/14

(54) **Zahnärztliches Handstück mit einer über ein Kupplungsstück mechanisch verbindbaren Werkzeugspitze**
Dental handtool with a tool tip which can be mechanically connected with a coupling piece
Pièce à main dentaire dotée d'une pointe d'outil pouvant être raccordée mécaniquement par l'intermédiaire d'un élément d'embrayage

(30) Priorität: 07.08.2007 DE 102007037129
(43) Veröffentlichungstag der Anmeldung: 11.02.2009
(73) Patentinhaber: Sirona Dental Systems GmbH, 64625 Bensheim (DE)
(72) Erfinder: Rein, Matthias, 64653 Lorsch (DE)
(74) Vertreter: Sommer, Peter

(56) Entgegenhaltungen:
- EP-A- 0 537 537
- EP-A- 0 879 649
- DE-A1- 10 001 513
- FR-A- 1 000 177
- US-A- 4 911 639

## Beschreibung

### Technisches Gebiet

Die Erfindung betrifft ein zahnärztliches Handstück umfassend ein Gehäuse und eine darin aufgenommene, eine Mittelachse aufweisende Sonotrode mit einem Ultraschallantrieb, wobei die Sonotrode eine Gehäusewand und ein zumindest teilweise durch die Gehäusewand gebildetes Kupplungssegment für eine Ultraschall-Werkzeugspitze aufweist, wobei die Ultraschall-Werkzeugspitze ein Kupplungsstück und einen das Kupplungsstück zumindest teilweise bildenden Grundkörper aufweist, wobei die Ultraschall-Werkzeugspitze mittels des Kupplungsstücks über das Kupplungssegment mit der Sonotrode verbindbar ist. Die Verbindung ist derart ausgebildet, dass eine möglichst verlustfreie Einkopplung der Ultraschallbewegung in die Werkzeugspitze gewährleistet ist.

### Stand der Technik

Es sind zahnärztliche Handstücke bekannt, bei welchen das Werkzeug über ein herkömmliches Gewinde auf das zahnärztliche Handstück aufgeschraubt wird. Dies erfordert in der Regel mehrere vollständige Umdrehungen zwischen dem auswechselbaren Werkzeug und dem zahnärztlichen Handstück, was bei häufigem Werkzeugwechsel sehr aufwendig ist.

Aus der US, 4, 911, 639 ist ein solches zahnärztliches Handstück bekannt, bei dem ein Werkeug mit auswechselbarer Werkzeuspitze über ein Gewinde auf das Handstück aufgeschraubt wird. Dabei wird die Werkzeugspitze quer zur Mittelachse des Handstücks gehalten, indem sie durch eine Ausnehmung zumindest teilweise in einen Inneraum im Werkzeug einbringar ist und an Halteflächen und einer achsenparal- lel verlaufenden beweglichen Gehäusewand des Werkzeugs gehalten wird.

Das Verbinden des Werkzeuges mit dem zahnärztlichen Handstück unter Einsatz eines normalen Gewindes ist mit gewissen Unwägbarkeiten, insbesondere den Ansatz des Gewindes betreffend, verbunden, so dass neben einem Defekt des Gewindes durch häufiges Verkanten auch das Herunterfallen des Werkzeuges bei nicht ausreichendem Gewindeeinsatz möglich ist.

Die Aufgabe der Erfindung besteht darin, ein zahnärztliches Handstück und ein Werkzeug derart auszubilden und anzuordnen, dass eine schnelle und vor allem sichere Verbindung zwischen dem Werkzeug und dem zahnärztlichen Handstück herstellbar ist.

### Darstellung der Erfindung

Gemäß der Erfindung ist das zahnärztliche Handstück dadurch gekennzeichnet, dass das Kupplungssegment einen vorzugsweise zylinderförmigen Innenraum aufweist, der durch die Gehäusewand, eine axiale Einkoppelwand und eine gegenüberliegend zur Einkoppelwand angeordnete Stützwand zumindest teilweise begrenzt ist, das Kupplungssegment eine in der Gehäusewand angeordnete, zumindest teilweise in eine Richtung der Mittelachse verlaufende, als Führungsschlitz ausgebildete Ausnehmung aufweist und dass das Kupplungsstück der Werkzeugspitze über den Führungsschlitz zumindest teilweise in radialer Richtung in den Innenraum einbringbar ist und die Einkoppelwand eine axiale Anschlagfläche aufweist, gegen welche der Grundkörper zumindest teilweise anlegbar ist, dass der Grundkörper der Werkzeugspitze eine stirnseitige Haltefläche aufweist, dass die Anschlagfläche und die Haltefläche der Werkzeugspitze plan ausgebildet sind oder eine Wölbung aufweisen, wobei die Wölbung kegelförmig oder kugelförmig ausgebildet ist und dass auf der Ultraschall-Werkzeugspitze das Vorspannmittel und ein vorzugsweise als Scheibe ausgebildetes Abstützmittel vorgesehen sind, dass das Abstützmittel auf der Ultraschall-Werkzeugspitze beweglich angeordnet ist und dass das Vorspannmittel zwischen dem Grundkörper und dem Abstützmittel vorspannbar ist. Durch den erfindungsgemäßen Aufbau kann die Werkzeugspitze -mit ihrem Grundkörper ohne weitere Drehbewegungen in die Sonotrode bzw. deren Gehäusewand eingeführt und festgesetzt werden. Der Führungsschlitz verläuft dabei bis zur Stirnseite der Sonotrode parallel zur Mittelachse und daran anschließend, ausgehend von der zylindrischen Mantelfläche der Sonotrode, in radialer Richtung bis zur Mittelachse, so dass die eingesetzte Werkzeugspitze in dem Schlitzende ko-axial zur Mittelachse aufgenommen bzw. gelagert ist.

Die stirnseitige Haltefläche ist der Teil des Grundkörpers, der die Kopplungszone für die Anschlagfläche darstellt. Die stirnseitige Haltefläche weist die gleiche geometrische Ausprägung wie die Anschlagfläche auf, damit eine bestmögliche Einkopplung der Ultraschallschwingung erfolgen kann.

Die korrespondierende Ausbildung zwischen der Anschlagfläche der Sonotrode und der Haltefläche des Grundkörpers der Werkzeugspitze gewährleistet einen sicheren Sitz des Grundkörpers innerhalb der Sonotrode, so dass die so gebildete Werkzeugspitze nicht verrutscht. Die kegelförmige Ausbildung der Flächen gewährleistet zudem eine bessere Zentrierung der Werkzeugspitze relativ zur Mittelachse, womit gleichzeitig in axialer und in radialer Richtung ein präziser Sitz gewährleistet ist. Eine ausreichend präzise Lagerung in axialer Richtung der Mittelachse wird in der Regel wie nachstehend beschrieben durch eine Vorspannung gewährleistet.

Über die bewegliche, als Abstützmittel ausgebildete Scheibe kann der Grundkörper über die Haltefläche unmittelbar gegen die Anschlagfläche vorgespannt werden. Die Scheibe stützt sich dabei an der stirnseitigen Stützwand der Sonotrode ab. Die Stützwand weist hierzu im Bereich desjenigen Teiles des Führungsschlitzes, in dem die Werkzeugspitze während des Betriebs angeordnet ist, eine Nut bzw. Aussparung auf, über die eine Zentrierung der Scheibe und damit der Werkzeugspitze relativ zur stirnseitigen Stützwand gewährleistet ist.

Die Erfindung betrifft weiterhin ein zahnärztliche Handstück, welches dadurch gekennzeichnet ist, dass das Kupplungssegment einen vorzugsweise zylinderförmigen Innenraum aufweist, der durch die Gehäusewand, eine axiale Einkoppelwand und eine gegenüberliegend zur Einkoppelwand angeordnete Stützwand zumindest teilweise begrenzt ist, das Kupplungssegment eine in der Gehäusewand angeordnete, zumindest teilweise in eine Richtung der Mittelachse verlaufende, als Führungsschlitz ausgebildete Ausnehmung aufweist und dass das Kupplungsstück der Werkzeugspitze über den Führungsschlitz zumindest teilweise in radialer Richtung in den Innenraum einbringbar ist und die Einkoppelwand eine axiale Anschlagfläche aufweist, gegen welche der Grundkörper zumindest teilweise anlegbar ist, dass der Grundkörper der Werkzeugspitze eine stirnseitige Haltefläche aufweist, dass die Anschlagfläche und die Haltefläche der Werkzeugspitze plan ausgebildet sind oder eine Wölbung aufweisen, wobei die Wölbung kegelförmig oder kugelförmig ausgebildet ist und dass auf der Ultraschall-Werkzeugspitze ein fest angeordnetes Abstützmittel vorgesehen ist, wobei das Vorspannmittel sonotrodenseitig in dem Innenraum zwischen der Stützwand und der Anschlagfläche vorgesehen und angeordnet ist.

Das Vorspannmittel ist damit Teil der Sonotrode und vereinfacht somit die Ausbildung der Werkzeugspitze.

Vorteilhaft kann auch sein, dass die Stützwand gegenüber-liegend zur Anschlagfläche angeordnet ist und dass zwischen dem Grundkörper der Werkzeugspitze und der Stützwand das Vorspannmittel vorgesehen ist, über das der Grundkörper gegen die Anschlagfläche vorspannbar ist. Nach dem Einsetzen des Grundkörpers bzw. während des Betriebs wird die Werkzeugspitze bzw. ihr Grundkörper gegen die Anschlagfläche der Einkoppelwand vorgespannt, so dass auch in axialer Richtung eine definierte Lagerung gewährleistet ist. Unter Berücksichtigung der Ausbildung der Anschlag- oder Haltefläche wird durch die axiale Vorspannung zudem wie vorstehend erläutert eine Zentrierung des Grundkörpers relativ zur Anschlagfläche gewährleistet.

Alternativ zu einem elastischen Vorspannmittel kann auch ein Rastmittel vorgesehen werden, welches den Grundkörper der Werkzeugspitze mittel- oder unmittelbar in axialer Richtung gegen die Anschlagfläche festsetzt. Das Rastmittel kann dabei derart keilförmig ausgebildet und angeordnet sein, dass eine Verstellung des Rastmittels in radialer Richtung zu einer Verspannung des Grundkörpers in axialer Richtung gewährleistet ist. Da die Ultraschallschwingung in diesem Fall auch auf das zusätzliche Rastmittel übertragen wird, kann sich dieses nachteilig auf die Schwingungseinkopplung insgesamt auswirken.

Daneben ist es vorteilhaft, dass der Grundkörper der Werkzeugspitze als Schwungmasse dient bzw. als solche ausgebildet ist, die mittel- oder unmittelbar an dem Ultraschallantrieb bzw. der Anschlagfläche anliegt. Die Einkopplung des Ultraschalls ausgehend vom Ultraschallantrieb erfolgt dabei über die Anschlagfläche auf die Schwungmasse, die letztlich unmittelbar in die Werkzeugspitze übergeht. Durch das Vorspannen der Schwungmasse gegen die Anschlagfläche wird ein optimaler Schwingungseintrag gewährleistet.

Vorteilhaft kann es auch sein, dass die Sonotrode die die Anschlagfläche aufweisende Einkoppelwand aufweist und der Ultraschallantrieb mittel- oder unmittelbar an der Einkoppelwand anliegt, wobei die Stützwand als vordere Stirnwand der Sonotrode ausgebildet ist. Somit erfolgt die Eintragung des Ultraschalls ausgehend vom Ultraschallantrieb unmittelbar über die Anschlagfläche auf den Grundkörper. Eine zusätzliche Masse ist nicht erforderlich. Die Vorspannung der Werkzeugspitze bzw. des Grundkörpers erfolgt wie nachstehend erläutert.

Es kann weiterhin von Vorteil sein, dass das Abstützmittel gegen die Stützwand der Sonotrode in axialer Richtung und/oder in radialer Richtung anlegbar ist. Wenn sich das Vorspannmittel auf der Werkzeugspitze befindet, ist das Abstützmittel gegen die Innenseite der Stützwand in axialer Richtung zwecks Verspannung des Grundkörpers anlegbar. Daneben kann das Abstützmittel auch in radialer Richtung anlegbar sein, damit die Werkzeugspitze in radialer Richtung abstützmittelseitig zentriert werden kann. Wenn das Vorspannmittel sonotrodenseitig im Innenraum angeordnet ist, so ist das Abstützmittel gegen eine Außenseite der Stützwand in radialer Richtung zwecks Zentrierung der Werkzeugspitze anlegbar. Die axiale Anlage erfolgt lediglich gegen die Anschlagfläche. Die Lagerung der Werkzeugspitze wäre sonst in axialer Richtung überbestimmt.

Hierzu kann es von Vorteil sein, dass das Abstützmittel scheibenförmig ausgebildet ist. Somit ist der zur Verfügung stehende Bauraum, insbesondere in axialer Richtung optimierbar.

Ferner kann es von Vorteil sein, dass die Ultraschall-Werkzeugspitze ein Anschlagelement aufweist, gegen welches das Abstützmittel anlegbar ist. Das Anschlagelement verhindert ein Herausrutschen oder Herunterfallen der auf die Werkzeugspitze aufgesteckten bzw. -geschobenen Scheibe.

Vorteilhaft kann es sein, dass das Vorspannmittel als Feder oder als Elastomer ausgebildet ist. Das Vorspannmittel stellt somit keine feste Schwingungsbrücke, die Einkopplungsverluste mit sich bringen würde, dar.

Auch kann es vorteilhaft sein, dass die Werkzeugspitze eine bezüglich der Mittelachse des Handstücks wirkende Verdrehsicherung aufweist. Die Verdrehsicherung wirkt damit auch bezüglich einer Parallelen zur Mittelachse.

Zudem kann es von Vorteil sein, dass die Verdrehsicherung als Positionierhilfe ausgebildet ist und mehrere bezüglich der Mittelachse definierte Winkelpositionen der Werkzeugspitze relativ zum Handstück gewährleistet. Die relative Winkelposition der Werkzeugspitze kann somit benutzerspezifisch im Rahmen der verschiedenen Möglichkeiten eingestellt werden. Zudem ist eine optimale Ausleuchtung und Kühlung der Werkzeugspitze möglich, da diese nur die vorgesehenen Winkelpositionen einnehmen kann, die auf die Anordnung der Beleuchtung und der Spray-Kühlung ausgerichtet sind.

Von Vorteil kann ebenso sein, dass die Werkzeugspitze, der Schaft, das Abstützmittel und/oder der Grundkörper zwecks Ausbildung der Verdrehsicherung zumindest über einen Teil der axialen Ausdehnung in Richtung der Mittelachse eine unrunde Querschnittsform Q aufweist, wobei die Stützwand und/oder die Anschlagfläche eine der Querschnittsform Q entsprechende geometrische Ausprägung A aufweist.

### Kurze Beschreibung der Zeichnung

In den Zeichnungen sind Ausführungsbeispiele der Erfindung dargestellt. Es zeigt die:
- Fig. 1a: ein zahnärztliches Handstück mit einer Ultra-schall-Werkzeugspitze im demontierten Zustand;
- Fig. 1b: eine Schnittdarstellung nach Figur 1a mit montierter Werkzeugspitze;
- Fig. 2a: eine alternative Ausführungsform der Feder;
- Fig. 2b: eine Schnittdarstellung in der Ansicht B-B ohne Werkzeugspitze von vorne;
- Fig. 2c: eine Ansicht der Fig. 2b von oben;
- Fig. 3: eine Ultraschall-Werkzeugspitze mit Verdrehsicherung;
- Fig. 4a: eine perspektivische Teilskizze gemäß Fig. 1 mit unrunder Querschnittsform Q;
- Fig. 4b: eine alternative Querschnittsform.

### Ausführungsbeispiele der Erfindung

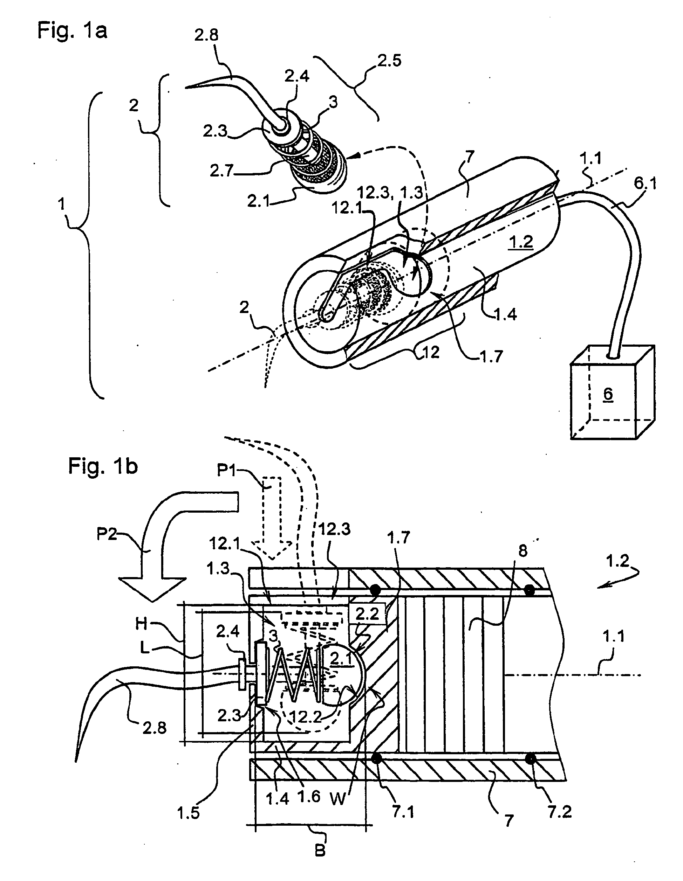

Figur 1a zeigt ein zahnärztliches Handstück 1 nach der Art eines Ultraschallscalers, welches über einen als Anschlussleitung ausgebildeten Versorgungsschlauch 6.1 mit einer Versorgungseinheit 6 verbunden ist. Das zahnärztliche Handstück 1 weist eine Sonotrode 1.2 auf, welche innerhalb eines Gehäuses 7 über O-Ringe 7.1, 7.2 gemäß Figur 1b gelagert ist. Ferner weisen die Sonotrode 1.2 sowie das Gehäuse 7 im Bereich der vorderen Stirnseite ein Kupplungssegment 12 für eine einen Grundkörper 2.1 und eine Spitze 2.8 aufweisende Werkzeugspitze 2 auf. Das Kupplungssegment 12 weist einen Innenraum 1.3 auf, der durch eine zylindrische Gehäusewand 1.4, eine stirnseitige Stützwand 1.5 und eine gegenüberliegend zur Stützwand 1.5 angeordnete Einkoppelwand 1.7 zumindest teilweise begrenzt ist. Ferner weist das Kupplungssegment 12 einen in Richtung einer Mittelachse 1.1 der Sonotrode 1.2 verlaufenden Führungsschlitz 12.1 in der Gehäusewand 1.4 auf, der an seinem hinteren Ende eine Verdickung 12.3 zum Einsetzen des Grundkörpers 2.1 aufweist. Der Führungsschlitz 12.1 verläuft innerhalb der Gehäusewand 1.4 bis an die als Stirnseite ausgebildete Stützwand 1.5. Dort verläuft der Führungsschlitz 12.1 in der Stützwand 1.5 in radialer Richtung bis in den Bereich der Mittelachse 1.1 der Stützwand 1.5, wo gemäß Figur 1b die Werkzeugspitze 2 bzw. ein Schaft 2.7 der Werkzeugspitze 2 (aus Figur 1a) im eingebauten Zustand angeordnet ist.

Gemäß Figur 1a weist die Werkzeugspitze 2 ein Kupplungsstück 2.5 auf, welches aus dem Grundkörper 2.1, dem Schaft 2.7 der Werkzeugspitze 2, einer Feder 3, einer als Abstützmittel ausgebildeten Scheibe 2.3 und einem Anschlagelement 2.4 gebildet ist. Die Feder 3 dient der Vorspannung der Werkzeugspitze 2 bzw. des Grundkörpers 2.1 gegen eine Anschlagfläche 12.2 als Teil des Kupplungssegments 12 des Handstücks 1 bzw. der Sonotrode 1.2. Die Feder 3 ist hierzu unmittelbar auf der Werkzeugspitze 2 bzw. dem Schaft 2.7 der Werkzeugspitze 2 angeordnet und zwischen dem Grundkörper 2.1 und der auf der Werkzeugspitze 2 bzw. auf dem Schaft 2.7 angeordneten, als Abstützmittel ausgebildeten Scheibe 2.3 vorgespannt.

Gemäß Figur 1b wird die Werkzeugspitze 2 durch den Führungsschlitz 12.1 bzw. die Verdickung 12.3 in radialer Richtung von oben (gestrichelt dargestellt) in Richtung Pfeil P1 mit dem Grundkörper 2.1 voran in den Innenraum 1.3 geführt. Dabei ist das Kupplungsstück 2.5 mit der Scheibe 2.3 in den Innenraum 1.3 einführbar, so dass die Werkzeugspitze 2 durch die mit Pfeil P2 dargestellte Dreh- bzw. Kippbewegung in die gewünschte Position bringbar ist. Der Schaft 2.7 bewegt sich dabei innerhalb des Führungsschlitzes 12.1, während die Scheibe 2.3 gegen die Vorspannung der Feder 3 zunächst gegen die Innenseite der Gehäusewand 1.4 und schließlich gegen die Stützwand 1.5 anliegt. Im Übergangsbereich zwischen der Innenseite der Gehäusewand 1.4 und der Stützwand 1.5 kann ein Montageradius vorgesehen sein, so dass die Kippbewegung der Werkzeugspitze 2 mit der Scheibe 2.3 leichter ausgeführt werden kann.

Die Höhe H bzw. der Durchmesser des Innenraumes 1.3 ist dabei mindestens so groß wie die Länge L des Kupplungsstücks 2.5, wobei die Breite B bzw. die Tiefe des Innenraumes 1.3 kleiner ist als die Höhe H, so dass die Scheibe 2.3 definiert gegen die Stützwand 1.5 und nicht gegen das Anschlagelement 2.4 zur Anlage kommt. Dadurch wird zudem die Vorspannkraft der Feder 3 erhöht.

Gemäß Schnittdarstellung Figur 1b liegt der Grundkörper 2.1 unmittelbar an der Anschlagfläche 12.2, wobei die Anschlagfläche 12.2 unmittelbar vor bzw. an einem Ultraschallantrieb 8 angeordnet ist, während die Stützwand 1.5 die vordere Stirnwand der Sonotrode 1.2 bildet. Der Grundkörper 2.1 der Werkzeugspitze 2 liegt dabei unmittelbar mit seiner Haltefläche 2.2 gegen die Anschlagfläche 12.2 an, so dass die Ultraschallbewegung von dem Ultraschallantrieb 8 über die Anschlagfläche 12.2 unmittelbar auf den Grundkörper 2.1 und damit auf die Werkzeugspitze 2 übertragen wird. Die Vorspannung des Grundkörpers 2.1 gegen die Anschlagfläche 12.2 erfolgt über die Feder 3, die sich über das Abstützmittel 2.3 gegen die Stützwand 1.5 abstützt. Die Stützwand 1.5 weist hierzu eine kreisringförmige Nut bzw. Ausnehmung 1.6 auf, über welche die Scheibe 2.3 mit Bezug zur Mittelachse 1.1 zentriert ist.

Damit im ausgebauten Zustand der Werkzeugspitze 2 die Scheibe 2.3 und die Feder 3 nicht von der Werkzeugspitze 2 herunterrutschen, weist die Werkzeugspitze 2 ein fest auf ihr angeordnetes Anschlagelement 2.4 auf, gegen welches die Scheibe 2.3 im ausgebauten Zustand gemäß Figur 1a anliegt bzw. durch welches die Scheibe 2.3 auf der Werkzeugspitze 2 gehalten wird.

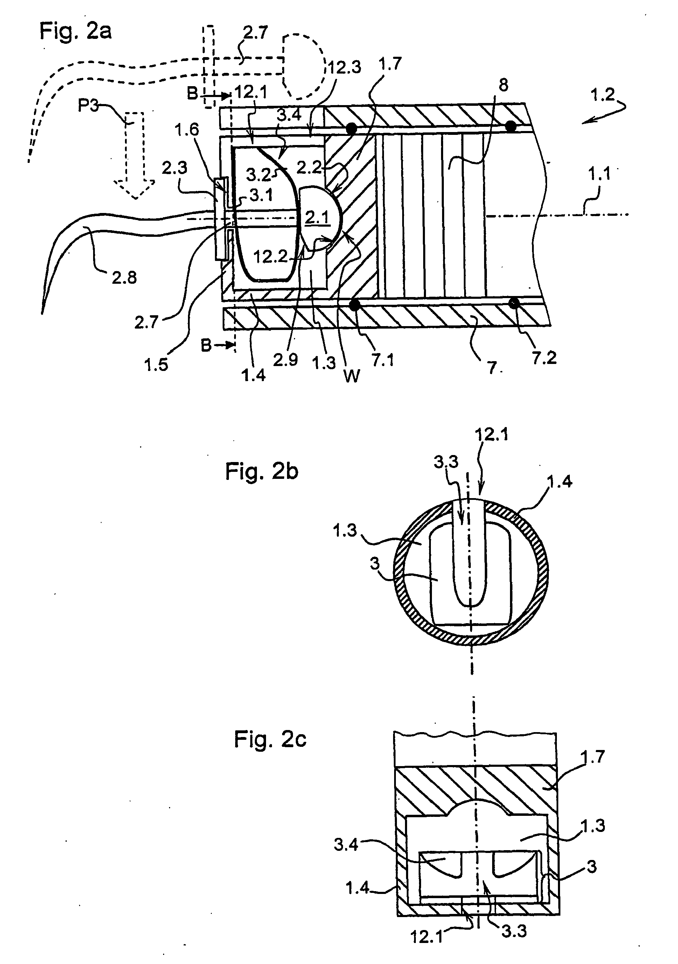

Im Ausführungsbeispiel gemäß Figur 2a ist die Feder 3 innerhalb des Innenraums 1.3 angeordnet. Die Feder 3 ist gemäß Schnittdarstellung Figur 2a im Wesentlichen U-förmig ausgebildet und weist zwei Schenkel 3.1, 3.2 auf. Der erste Schenkel 3.1 liegt gegen die Stützwand 1.5 an, während der zweite Schenkel 3.2 gegen den Grundkörper 2.1 anliegt, so dass der Grundkörper 2.1 gegen die Anschlagfläche 12.2 vorspannbar ist. Der zweite Schenkel 3.2 weist zudem eine Gleitfläche 3.4 auf, gegen die der Grundkörper 2.1 zum Vorspannen des zweiten Schenkels 3.2 in Richtung der Werkzeugspitze 2 anlegbar ist. Die Feder 3 ist an dem unteren Ende, also an der Verbindungsstelle der beiden Schenkel 3.1, 3.2 mit Abstand zur zylinderförmigen Gehäusewand 1.4 angeordnet. Somit kann die Verbindungsstelle bzw. der Übergang zwischen den beiden Schenkeln 3.1, 3.2 breiter ausgebildet werden.

Zwecks Einführung der Werkzeugspitze 2 bzw. deren Schaft 2.7 weist die Feder 3 gemäß Figur 2b, Schnitt B-B (ohne Werkzeugspitze 2) einen Schlitz 3.3 auf, der sowohl im ersten Schenkel 3.1 als auch im zweiten Schenkel 3.2 vorgesehen ist. Der Schlitz 3.3 steht in radialer Ausrichtung zum Führungsschlitz 12.1 der Gehäusewand 1.4, so dass der Schaft 2.7 von außen eingesetzt werden kann. Die Werkzeugspitze 2 kann in der waagrechten Position in Richtung des Pfeils P3 gemäß Fig. 2a in den Führungsschlitz 12.1 eingelegt werden. Auf ein Verhältnis zwischen der Höhe H und der Breite B des Innenraumes 1.3 kommt es dabei nicht an. Der Innenraum 1.3 könnte in seiner radialen Ausdehnung wesentlich kleiner ausgebildet sein.

Der Grundkörper 2.1 weist eine Einfügeschräge 2.9 als Montagehilfe auf, damit der Grundkörper 2.1 zwischen dem Schenkel 3.2 und der Einkoppelwand 1.7 gegen die Vorspannung des Schenkels 3.2 eingesetzt werden kann.

In der vereinfachten Draufsicht gemäß Fig. 2c ist der Führungsschlitz 12.1 mit der Verdickung 12.3 und der im Innenraum 1.3 angeordneten Feder 3 mit dem Schlitz 3.3 und der Gleitfläche 3.4 ohne die Werkzeugspitze 2 dargestellt. Die Werkzeugspitze 2 wird wie vorstehend zu Figur 2a beschrieben in Richtung des Pfeils P3 in radialer Richtung von oben eingesetzt.

Die Scheibe 2.3 ist fest auf der Werkzeugspitze 2 bzw. auf dem Schaft 2.7 angeordnet und dient der Lagerung bzw. der Zentrierung des Schaftes 2.7 innerhalb der Ausnehmung 1.6 der Stützwand 1.5 zumindest in radialer Richtung.

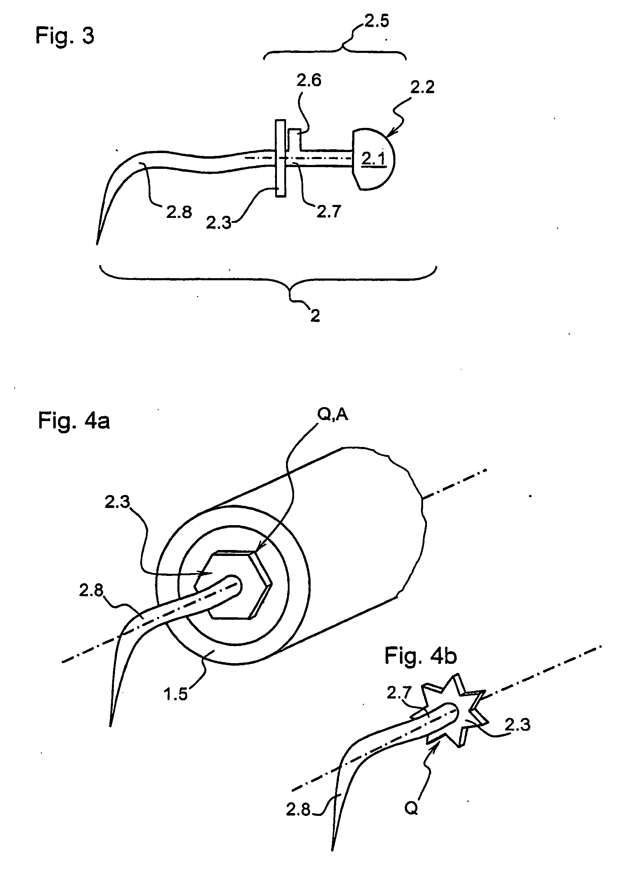

Die Werkzeugspitze 2 gemäß Figur 3 weist an dem Schaft 2.7 eine Verdrehsicherung 2.6 auf. Die Verdrehsicherung 2.6 ist als Nase ausgebildet, die in radialer Richtung von dem Schaft 2.7 absteht. Die Verdrehsicherung 2.6 ist im eingebauten Zustand innerhalb des stirnseitigen Führungsschlitzes 12.1 in der Stützwand 1.5 platziert, so dass die Werkzeugspitze 2 nur in einer Ausrichtung eingebaut werden kann und sich nicht um die Mittelachse 1.1 drehen kann.

Die Verdrehsicherung 2.6 ist in einem nicht dargestellten Ausführungsbeispiel auch für die Werkzeugspitze 2 gemäß Figur 1a, 1b vorgesehen.

Bei allen Ausführungsbeispielen weist der Grundkörper 2.1 eine gewölbte, konvex bzw. sphärisch geformte Haltefläche 2.2 auf, wobei die Anschlagfläche 12.2 der Sonotrode 1.2 in entsprechender Weise gewölbt konkav ausgebildet ist, so dass aufgrund der über die Feder 3 generierten Vorspannkraft eine Fixierung in radialer Richtung zu der Mittelachse 1.1 erfolgt.

Die in Figur 4a dargestellte perspektivische Teilskizze zeigt das Handstück 1 mit der montierten Werkzeugspitze 2.8 von vorne. Das Abstützmittel 2.3 weist eine 6-kantförmige Querschnittsform Q auf. Das Abstützmittel 2.3 ist innerhalb der Ausnehmung 1.6 der Stützwand 1.5 angeordnet, wobei die Ausnehmung 1.6 eine entsprechende 6-kantförmige, geometrische Ausprägung A aufweist. Somit ist das Abstützmittel 2.3 in sechs verschiedenen Winkelpositionen innerhalb der Ausnehmung 1.6 einsetzbar und in jeder dieser Positionen gegen Verdrehen gesichert.

In Figur 4b ist eine alternative zahnradförmige Querschnittsform für das Abstützmittel 2.3 dargestellt. Das Abstützmittel 2.3 weist sieben symmetrisch angeordnete Flanken auf. Somit ist das Abstützmittel 2.3 in sieben verschiedenen Winkelpositionen innerhalb der Ausnehmung 1.6 einsetzbar.

### Bezugszeichen

- 1: Handstück
- 1.1: Mittelachse
- 1.2: Sonotrode
- 1.3: Innenraum
- 1.4: Gehäusewand
- 1.5: Stützwand
- 1.6: Ausnehmung, Nut
- 1.7: Einkoppelwand
- 2: Ultraschall-Werkzeugspitze, Werkzeugspitze
- 2.1: Grundkörper, Masse
- 2.2: Haltefläche
- 2.3: Abstützmittel, Scheibe
- 2.4: Anschlagelement
- 2.5: Kupplungsstück
- 2.6: Verdrehsicherung
- 2.7: Schaft
- 2.8: Spitze
- 2.9: Einfügeschräge
- 3: Vorspannmittel, Feder, Vorspannfeder
- 3.1: erster Schenkel
- 3.2: zweiter Schenkel
- 3.3: Schlitz
- 3.4: Gleitfläche
- 6: Versorgungseinheit
- 6.1: Anschlussleitung, Versorgungsschlauch
- 7: Gehäuse
- 7.1: O-Ring
- 7.2: O-Ring
- 8: Ultraschallantrieb
- 12: Kupplungssegment
- 12.1: Führungsschlitz, Ausnehmung
- 12.2: Anschlagfläche
- 12.3: Verdickung

- A: Ausprägung, geometrisch
- B: Breite
- H: Höhe
- L: Länge
- P1: Pfeil
- P2: Pfeil
- P3: Pfeil
- Q: Querschnittsform
- W: Wölbung

## Patentansprüche

1. Zahnärztliches Handstück (1), umfassend ein Gehäuse (7) und eine darin aufgenommene, eine Mittelachse (1.1) aufweisende Sonotrode (1.2) mit einem Ultraschallantrieb (8), wobei die Sonotrode (1.2) eine Gehäusewand (1.4) und ein zumindest teilweise durch die Gehäusewand (1.4) gebildetes Kupplungssegment (12) für eine Ultraschall-Werkzeugspitze (2) aufweist, wobei die Ultraschall-Werkzeugspitze (2) ein Kupplungsstück (2.5) und einen das Kupplungsstück (2.5) zumindest teilweise bildenden Grundkörper (2.1) aufweist, wobei die Ultraschall-Werkzeugspitze (2) mittels des Kupplungsstücks (2.5) über das Kupplungssegment (12) mit der Sonotrode (1.2) verbindbar ist,
wobei
- das Kupplungssegment (12) einen Innenraum (1.3) aufweist, der durch die Gehäusewand (1.4), eine axiale Einkoppelwand (1.7) und eine gegenüberliegend zur Einkoppelwand (1.7) angeordnet Stützwand (1.5) zumindest teilweise begrenzt ist,
- das Kupplungssegment (12) eine in der Gehäusewand (1.4) angeordnete, zumindest teilweise in eine Richtung der Mittelachse (1.1) verlaufende, als Führungsschlitz ausgebildete Ausnehmung (12.1) aufweist,
- das Kupplungsstück (2.5) der Werkzeugspitze (2) über den Führungsschlitz (12.1) zumindest teilweise in den Innenraum (1.3) einbringbar ist,
- die Einkoppelwand (1.7) eine axiale Anschlagfläche (12.2) aufweist, gegen welche der Grundkörper (2.1) über ein Vorspannmittel (3) anlegbar ist, **dadurch gekennzeichnet, dass**
- der Grundkörper (2.1) der Werkzeugspitze (2) eine stirnseitige Haltefläche (2.2) aufweist, dass
- die Anschlagfläche (12.2) und die Haltefläche (2.2) der Werkzeugspitze (2) plan ausgebildet sind oder eine Wölbung (W) aufweisen, dass
- die Wölbung (W) kegelförmig oder kugelförmig ausgebildet ist und dass
- auf der Ultraschall-Werkzeugspitze (2) das Vorspannmittel (3) und ein Abstützmittel (2.3) angeordnet sind, dass das Abstützmittel (2.3) auf der Ultraschall-Werkzeugspitze (2) beweglich angeordnet ist und dass das Vorspannmittel (3) zwischen dem Grundkörper (2.1) und dem Abstützmittel (2.3) vorspannbar ist.

2. Zahnärztliches Handstück (1) umfassend ein Gehäuse (7) und eine darin aufgenommene, eine Mittelachse (1.1) aufweisende Sonotrode (1.2) mit einem Ultraschallantrieb (8), wobei die Sonotrode (1.2) eine Gehäusewand (1.4) und ein zumindest teilweise durch die Gehäusewand (1.4) gebildetes Kupplungssegment (12) für eine Ultraschall-Werkzeugspitze (2) aufweist, wobei die Ultraschall-Werkzeugspitze (2) ein Kupplungsstück (2.5) und einen das Kupplungsstück (2.5) zumindest teilweise bildenden Grundkörper (2.1) aufweist, wobei die Ultraschall-Werkzeugspitze (2) mittels des Kupplungsstücks (2.5) über das Kupplungssegment (12) mit der Sonotrode (1.2) verbindbar ist,
wobei
- das Kupplungssegment (12) einen Innenraum (1.3) aufweist, der durch die Gehäusewand (1.4), eine axiale Einkoppelwand (1.7) und eine gegenüberliegend zur Einkoppelwand (1.7) angeordnete Stützwand (1.5) zumindest teilweise begrenzt ist,
- das Kupplungssegment (12) eine in der Gehäusewand (1.4) angeordnete, zumindest teilweise in eine Richtung der Mittelachse (1.1) verlaufende, als Führungsschlitz ausgebildete Ausnehmung (12.1) aufweist,
- das Kupplungsstück (2.5) der Werkzeugspitze (2) über den Führungsschlitz (12.1) zumindest teilweise in den Innenraum (1.3) einbringbar ist,
- die Einkoppelwand (1.7) eine axiale Anschlagfläche (12.2) aufweist, gegen welche der Grundkörper (2.1) über ein Vorspannmittel (3) anlegbar ist, **dadurch gekennzeichnet, dass**
- der Grundkörper (2.1) der Werkzeugspitze (2) eine stirnseitige Haltefläche (2.2) aufweist, dass
- die Anschlagfläche (12.2) und die Haltefläche (2.2) der Werkzeugspitze (2) plan ausgebildet sind oder eine Wölbung (W) aufweisen, dass
- die Wölbung (W) kegelförmig oder kugelförmig ausgebildet ist und dass
- auf der Ultraschall-Werkzeugspitze (2) ein fest angeordnetes Abstützmittel (2.3) vorgesehen ist, wobei das Vorspannmittel (3) in dem Innenraum (1.3) zwischen der Stützwand (1.5) und der Anschlagfläche (12.2) angeordnet ist.

3. Zahnärztliches Handstück nach Anspruch 1 oder 2, **dadurch gekennzeichnet, dass** die Stützwand (1.5) gegenüberliegend zur Anschlagfläche (12.2) angeordnet ist und dass das Vorspannmittel (3) zwischen dem Grundkörper (2.1) der Werkzeugspitze (2) und der Stützwand (1.5) vorgesehen ist, wobei der Grundkörper (2.1) über das Vorspannmittel (3) gegen die Anschlagfläche (12.2) vorspannbar ist.

4. Zahnärztliches Handstück nach einem der Ansprüche 1 bis 3, **dadurch gekennzeichnet, dass** der Grundkörper (2.1) der Werkzeugspitze (2) als Schwungmasse ausgebildet ist.

5. Zahnärztliches Handstück nach einem der Ansprüche 1 bis 4, **dadurch gekennzeichnet, dass** der Ultraschallantrieb (8) mittel- oder unmittelbar an der Einkoppelwand (1.7) anliegt, wobei die Stützwand (1.5) als vordere Stirnwand der Sonotrode (1.2) ausgebildet ist.

6. Zahnärztliches Handstück nach einem der Ansprüche 1 bis 5, **dadurch gekennzeichnet, dass** das Abstützmittel (2.3) gegen die Stützwand (1.5) der Sonotrode (1.2) in radialer Richtung und/oder in axialer Richtung anlegbar ist.

7. Zahnärztliches Handstück nach einem der Ansprüche 1 bis 6, **dadurch gekennzeichnet, dass** das Abstützmittel (2.3) scheibenförmig ausgebildet ist.

8. Zahnärztliches Handstück nach einem der Ansprüche 1 bis 7, **dadurch gekennzeichnet, dass** die Ultraschall-Werkzeugspitze (2) ein Anschlagelement (2.4) aufweist, gegen welches das Abstützmittel. (2.3) anlegbar ist.

9. Zahnärztliches Handstück nach einem der Ansprüche 1 bis 8, **dadurch gekennzeichnet, dass** die Werkzeugspitze (2) eine bezüglich der Mittelachse (1.1) des Handstücks (1) wirkende Verdrehsicherung (2.6) aufweist.

10. Zahnärztliches Handstück nach Anspruch 9, **dadurch gekennzeichnet, dass** die Verdrehsicherung (2.6) als Positionierhilfe ausgebildet ist und mehrere bezüglich der Mittelachse (1.1) definierte Winkelpositionen der
Werkzeugspitze (2) relativ zum Handstück (1) gewährleistet.

11. Zahnärztliches Handstück nach Anspruch 9 oder 10, **dadurch gekennzeichnet, dass** die Werkzeugspitze (2), der Schaft (2.7), das Abstützmittel (2.3) und/oder der Grundkörper (2.1) zwecks Ausbildung der Verdrehsicherung (2.6) zumindest über einen Teil der axialen Ausdehnung in Richtung der Mittelachse (1.1) eine unrunde Querschnittsform (Q) aufweist, wobei die Stützwand (1.5), die Ausnehmung (1.6) und/oder die Anschlagfläche (12.2) eine der Querschnittsform (Q) entsprechende geometrische Ausprägung A aufweist.

## Claims

1. A dental handpiece (1) comprising a housing (7) that accommodates a sonotrode (1.2) having an ultrasonic driving mechanism (8) and a center axis (1.1), wherein said sonotrode (1.2) has a casing wall (1.4) and a coupling segment (12) for an ultrasonic tip (2), said coupling segment (12) being at least partially formed through said casing wall (1.4) and wherein said ultrasonic tip (2) has a coupling element (2.5) and a basic body (2.1) that at least partially forms said coupling element (2.5) and said ultrasonic tip (2) is capable of being connected to said sonotrode (1.2) by means of said coupling element (2.5) via said coupling segment (12), and said coupling segment (12) has an interior chamber (1.3) that is at least partially delimited by said casing wall (1.4), an axial coupling wall (1.7), and a supporting wall (1.5) located opposite to said coupling wall (1.7), said coupling segment (12) comprising a recess (12.1) in the form of a guide slot disposed in the casing wall (1.4) and extending at least partly in the direction of said center axis (1.1) and said coupling element (2.5) of said dental tip (2) being capable of insertion through said guide slot (12.1) at least partly into said interior chamber (1.3), whilst said coupling wall (1.7) has an axial stop limit surface (12.2), against which the basic body (2.1) can be biased by biasing means (3), **characterized in that**
- said basic body (2.1) of said dental tip (2) has a retaining surface (2.2) at its end,
- said stop limit surface (12.2) and said retaining surface (2.2) of said dental tip (2) are plane or have a camber (W),
- said camber (W) is conical or spherical,
- said biasing means (3) and supporting means (2.3) are disposed on said ultrasonic tip (2)
- said supporting means (2.3) is movably disposed on said ultrasonic tip (2), and
- said biasing means (3) is biased between said basic body (2.1) and said supporting means (2.3).

2. A dental handpiece (1) comprising a housing (7) that accommodates a sonotrode (1.2) having an ultrasonic driving mechanism (8) and a center axis (1.1), wherein said sonotrode (1.2) has a casing wall (1.4) and a coupling segment (12) for an ultrasonic tip (2), said coupling segment (12) being at least partially formed through said casing wall (1.4) and wherein said ultrasonic tip (2) has a coupling element (2.5) and a basic body (2.1) that at least partially forms said coupling element (2.5) and said ultrasonic tip (2) is capable of being connected to said sonotrode (1.2) by means of said coupling element (2.5) via said coupling segment (12), and said coupling segment (12) has an interior chamber (1.3) that is at least partially delimited by said casing wall (1.4), an axial coupling wall (1.7), and a supporting wall (1.5) located opposite to said coupling wall (1.7), said coupling segment (12) comprising a recess (12.1) in the form of a guide slot disposed in the casing wall (1.4) and extending at least partly in the direction of said center axis (1.1) and said coupling element (2.5) of said dental tip (2) being capable of insertion through said guide slot (12.1) at least partly into said interior chamber (1.3), whilst said coupling wall (1.7) has an axial stop limit surface (12.2), against which the basic body (2.1) can be biased by biasing means (3), **characterized in that**
--said basic body (2.1) of said dental tip (2) comprises a retaining surface (2.2) at its end,
--said stop limit surface (12.2) and said retaining surface (2.2) of said dental tip (2) are plane or have a camber (W),
--said camber (W) is conical or spherical, and
--supporting means (2.3) is securely mounted on said ultrasonic tip (2), said biasing means (3) being disposed in said interior chamber (1.3) between said supporting wall (1.5) and said stop limit surface (12.2).

3. A dental handpiece as defined in claim 1 or claim 2, **characterized in that** said supporting wall (1.5) is disposed opposite to said stop limit surface (12.2) and said biasing means (3) is provided between said basic body (2.1) of said dental tip (2) and said supporting wall (1.5), wherein said basic body (2.1) can be biased by said biasing means (3) against said stop limit surface (12.2).

4. A dental handpiece as defined in any one of claims 1 to 3, **characterized in that** said basic body (2.1) of said dental tip (2) is in the form of a centrifugal mass.

5. A dental handpiece as defined in any one of claims 1 to 4, **characterized in that** said ultrasonic driving mechanism (8) directly or indirectly bears against said coupling wall (1.7), said supporting wall (1.5) being the front end wall of said sonotrode (1.2).

6. A dental handpiece as defined in any one of claims 1 to 5, **characterized in that** said supporting means (2.3) can be biased against said supporting wall (1.5) of said sonotrode (1.2) in the radial direction and/or in the axial direction.

7. A dental handpiece as defined in any one of claims 1 to 6, **characterized in that** said supporting means (2.3) is in the form of a disc.

8. A dental handpiece as defined in any one of claims 1 to 7, **characterized in that** said ultrasonic tip (2) has a limit stop member (2.4), against which said supporting means (2.3) can be biased.

9. A dental handpiece as defined in any one of claims 1 to 8, **characterized in that** said dental tip (2) has an anti-twist stop (2.6) effective with reference to said center axis (1.1) of said handpiece (1).

10. A dental handpiece as defined in claim 9, **characterized in that** said anti-twist stop (2.6) is in the form of a positioning aid to provide a plurality of defined angular positions of said dental tip (2) about said center axis (1.1) relative to said handpiece (1).

11. A dental handpiece as defined in claim 9 or claim 10, **characterized in that** said dental tip (2), the shaft (2.7), said supporting means (2.3), and/or said basic body (2.1) have, for the purpose of forming said anti-twist stop (2.6), a non-circular cross-sectional shape (Q) over at least part of the axial extension in the direction of the center axis (1.1), and said supporting wall (1.5), said recess (1.6), and/or said stop limit surface (12.2) have a geometrical form A that is complementary to said cross-sectional shape (Q).

## Revendications

1. Pièce à main dentaire (1), comprenant un boîtier (7) et une sonotrode (1.2) logée dans celui-ci, présentant une ligne médiane (1.1) et munie d'un actionneur à ultrasons (8), dans laquelle la sonotrode (1.2) présente une paroi de boîtier (1.4) et un segment d'accouplement (12), formé au moins en partie par la paroi de boîtier (1.4), pour une pointe d'outil à ultrasons (2), dans laquelle la pointe d'outil à ultrasons (2) présente une pièce d'accouplement (2.5) et un corps de base (2.1) constituant au moins en partie la pièce d'accouplement (2.5), dans laquelle la pointe d'outil à ultrasons (2) peut être reliée à la sonotrode (1.2) au moyen de la pièce d'accouplement (2.5) par l'intermédiaire du segment d'accouplement (12),
dans laquelle
- le segment d'accouplement (12) présente un espace intérieur (1.3) qui est délimité au moins en partie par la paroi de boîtier (1.4), une paroi d'injection axiale (1.7) et une paroi d'appui (1.5) disposée en face de la paroi d'injection (1.7),
- le segment d'accouplement (12) présente un évidement (12.1) réalisé sous forme de fente de guidage, disposé dans la paroi de boîtier (1.4) et s'étendant au moins en partie dans une direction de la ligne médiane (1.1),
- la pièce d'accouplement (2.5) de la pointe d'outil (2) peut être introduite au moins en partie dans l'espace intérieur (1.3) par l'intermédiaire de la l'espace intérieur (1.3) par l'intermédiaire de la fente de guidage (12.1),
- la paroi d'injection (1.7) présente une surface de butée axiale (12.2) contre laquelle peut s'appliquer le corps de base (2.1) par l'intermédiaire d'un moyen de précontrainte (3),
**caractérisée en ce que**
- le corps de base (2.1) de la pointe d'outil (2) présente une surface de maintien frontale (2.2), **en ce que**
- la surface de butée (12.2) et la surface de maintien (2.2) de la pointe d'outil (2) sont réalisées de façon plane ou présentent une courbure (W), **en ce que**
- la courbure (W) est réalisée de forme conique ou sphérique, et **en ce que**
- sur la pointe d'outil à ultrasons (2) sont disposés le moyen de précontrainte (3) et un moyen d'appui (2.3), **en ce que** le moyen d'appui (2.3) est disposé de façon mobile sur la pointe d'outil à ultrasons (2), et **en ce que** le moyen de précontrainte (3) peut être précontraint entre le corps de base (2.1) et le moyen d'appui (2.3).

2. Pièce à main dentaire (1), comprenant un boîtier (7) et une sonotrode (1.2) logée dans celui-ci, présentant une ligne médiane (1.1) et munie d'un actionneur à ultrasons (8), dans laquelle la sonotrode (1.2) présente une paroi de boîtier (1.4) et un segment d'accouplement (12) formé au moins en partie par la paroi de boîtier (1.4) pour une pointe d'outil à ultrasons (2), dans laquelle la pointe d'outil à ultrasons (2) présente une pièce d'accouplement (2.5) et un corps de base (2.1) constituant au moins en partie la pièce d'accouplement (2.5), dans laquelle la pointe d'outil à ultrasons (2) peut être reliée à la sonotrode (1.2) au moyen de la pièce d'accouplement (2.5) par l'intermédiaire du segment d'accouplement (12).
dans laquelle
- le segment d'accouplement (12) présente un espace intérieur (1.3) qui est délimité au moins en partie par la paroi de boîtier (1.4), une paroi d'injection axiale (1.7) et une paroi d'appui (1.5) disposée en face de la paroi d'injection (1.7),
- le segment d'accouplement (12) présente un évidement (12.1) réalisé sous forme de fente de guidage, disposé dans la paroi de boîtier (1.4) et s'étendant au moins en partie dans une direction de la ligne médiane (1.1),
- la pièce d'accouplement (2.5) de la pointe d'outil (2) peut être introduite au moins en partie dans l'espace intérieur (1.3) par l'intermédiaire de la fente de guidage (12.1),
- la paroi d'injection (1.7) présente une surface de butée axiale (12.2) contre laquelle peut s'appliquer le corps de base (2.1) par l'intermédiaire d'un moyen de précontrainte (3),
**caractérisée en ce que**
- le corps de base (2.1) de la pointe d'outil (2) présente une surface de maintien frontale (2.2), **en ce que**
- la surface de butée (12.2) et la surface de maintien (2.2) de la pointe d'outil (2) sont réalisées de façon plane ou présentent une courbure (W), **en ce que**
- la courbure (W) est réalisée de forme conique ou sphérique, et **en ce que**
- sur la pointe d'outil à ultrasons (2) est prévu un moyen d'appui (2.3) disposé solidement, le moyen de précontrainte (3) étant disposé dans l'espace intérieur (1.3) entre la paroi d'appui (1.5) et la surface de butée (12.2).

3. Pièce à main dentaire selon la revendication 1 ou 2, **caractérisée en ce que** la paroi d'appui (1.5) est disposée en face de la surface de butée (12.2), et **en ce que** le moyen de précontrainte (3) est prévu entre le corps de base (2.1) de la pointe d'outil (2) et la paroi d'appui (1.5), le corps de base (2.1) pouvant être précontraint contre la surface de butée (12.2) par l'intermédiaire du moyen de précontrainte (3).

4. Pièce à main dentaire selon l'une quelconque des revendications 1 à 3, **caractérisée en ce que** le corps de base (2.1) de la pointe d'outil (2) est réalisé comme une masse centrifuge.

5. Pièce à main dentaire selon l'une quelconque des revendications 1 à 4, **caractérisée en ce que** l'actionneur à ultrasons (8) est appliqué indirectement ou directement contre la paroi d'injection (1.7), la paroi d'appui (1.5) étant réalisée comme une paroi frontale avant de la sonotrode (1.2).

6. Pièce à main dentaire selon l'une quelconque des revendications 1 à 5, **caractérisée en ce que** le moyen d'appui (2.3) peut être appliqué contre la paroi d'appui (1.5) de la sonotrode (1.2) dans la direction radiale et/ou dans la direction axiale.

7. Pièce à main dentaire selon l'une quelconque des revendications 1 à 6, **caractérisée en ce que** le moyen d'appui (2.3) est réalisé en forme de disque.

8. Pièce à main dentaire selon l'une quelconque des revendications 1 à 7, **caractérisée en ce que** la pointe d'outil à ultrasons (2) présente un élément de butée (2.4) contre lequel peut s'appliquer le moyen d'appui (2.3).

9. Pièce à main dentaire selon l'une quelconque des revendications 1 à 8, **caractérisée en ce que** la pointe d'outil (2) présente un dispositif anti-torsion (2.6) agissant par rapport à la ligne médiane (1.1) de la pièce à main (1).

10. Pièce à main dentaire selon la revendication 9, **caractérisée en ce que** le dispositif anti-torsion (2.6) est réalisé comme une aide au positionnement et assure plusieurs positions angulaires de la pointe d'outil (2) relatives à la pièce à main (1), définies par rapport à la ligne médiane (1.1).

11. Pièce à main dentaire selon la revendication 9 ou 10, **caractérisée en ce que** la pointe de pièce d'outil (2), le manche (2.7), le moyen d'appui (2.3) et/ou le corps de base (2.1) présente(nt) pour la réalisation du dispositif anti-torsion (2.6) au moins sur une partie de l'étendue axiale en direction de la ligne médiane (1.1) une forme ovalisée de section transversale (Q), la paroi d'appui (1.5), l'évidement (1.6) et/ou la surface de butée (12.2) présentant une configuration géométrique A correspondant à la forme de section transversale (Q).
